(19) Europäisches Patentamt
European Patent Office
Office européen des brevets

(11) Publication number: 0 366 183 A2

(12) EUROPEAN PATENT APPLICATION

(21) Application number: 89202619.6

(51) Int. Cl.5: C08F 283/08 , C08L 51/08

(22) Date of filing: 17.10.89

(30) Priority: 28.10.88 IT 2245188

(43) Date of publication of application: 02.05.90 Bulletin 90/18

(84) Designated Contracting States: AT BE CH DE ES FR GB GR LI LU NL SE

(71) Applicant: ENICHEM S.p.A.
Via Mozart 1
I-20122 Milano(IT)

(72) Inventor: Penco, Maurizio
Viale Risorgimento 1
I-20073 Codogno Milan(IT)
Inventor: Villa, Anna Maria
Via F. Cavallotti 112
I-20052 Monza Milan(IT)
Inventor: Pegoraro, Mario
S. Felice Strada 8, Nr. 11
I-20090 Segrate Milan(IT)
Inventor: Di Silvestro, Giuseppe
Via Quasimodo 4
I-20030 Lentate Sul Seveso Milan(IT)

(74) Representative: Roggero, Sergio et al
Ing. Barzanò & Zanardo Milano S.p.A. Via Borgonuovo 10
I-20121 Milano(IT)

# (54) Cross-linkable polymer compositions based on polyphenylene ethers and vinylaromatic monomers.

(57) Polymer compositions cross-linkable both by thermal treatment and by the effect of U.V. radiation are composed of:

1) a polyphenylene ether (PPE) deriving from the (co)polymerization of one or more substituted phenols by oxidative coupling;
2) at least one mono-unsaturated vinylaromatic monomer;
3) at least one polyunsaturated vinylaromatic monomer;
4) optionally, at least one radical polymerization initiator;
5) usual additives, accelerators, stabilizers and flame retardants.

By thermal treatment or U.V. irradiation of said compositions when introduced either alone or in combination with other reinforcement materials into suitable moulds, finished articles are obtained composed essentially of an intimately copenetrated polymer blend in which component 1 is uniformly dispersed in a cross-linked matrix of vinylaromatic polymer formed from components 2 and 3. The polymer blends obtained by the thermal or U.V. polymerization of the polymer compositions of the present invention are characterised by thermal and mechanical properties clearly superior to the corresponding polymer blends obtained by mechanically mixing polystyrene and PPE together in the molten state.

EP 0 366 183 A2

# CROSS-LINKABLE POLYMER COMPOSITIONS BASED ON POLYPHENYLENE ETHERS AND VINYLAROMATIC MONOMERS

This invention relates to cross-linkable polymer compositions based on polyphenylene ether (PPE) comprising:

A) from 10 to 90 percent by weight of at least one polyphenylene ether;

B) from 10 to 90 percent by weight of a mixture of vinylaromatic monomers consisting of:

$B_1$) from 0 to 95 percent by weight of at least one mono-unsaturated vinylaromatic monomer

$B_2$) from 5 to 100 percent by weight of at least one polyunsaturated vinylaromatic monomer;

C) from 0.01 to 10 percent by weight with respect to component B of one or more radical generators able to promote the thermal and/or U.V. polymerization of the monomers in B;

D) usual additives, accelerators, stabilizers and flame retardants.

Such compositions are directly usable in the production of manufactured articles of any required shape and size either by thermal treatment, after pouring or injecting the polymer mixtures into suitable moulds, or by U.V. irradiation.

The choice between the two different transformation methods depends on the type of article to be produced. Polymer compositions to be spread in a thin layer over moulds, surfaces or support fabric for transformation into a small-thickness, large-surface product are generally more suitable for U.V. treatment. This for example is the case in the production of composite material sheets variously shaped according to their use, the production of sheets for laminates, or the production of so-called prepregs.

Whatever the chosen transformation method, the polymer compositions according to the present invention are transformed by radical polymerization of the vinylaromatic monomers (components $B_1$ and $B_2$) and simultaneous cross-linkage of the growing polymer molecules caused by the polyunsaturated vinylaromatic monomers (component $B_2$) into a solid, rigid resin consisting essentially of an intimately penetrated uniform dispersion of polyphenylene ether (component A) in the just formed cross-linked polymer matrix. Of the two resultant polymer matrices, only that deriving from the polymerization of the vinylaromatic monomers is cross-linked because the polyphenylene ether matrix remains substantially unaltered.

This has been demonstrated by repeated solvent extraction tests in which it was always the PPE which was dissolved.

The resins obtained by thermal or U.V. treatment of the polymer compositions of the present invention, which are also claimed by the applicant together with their preparation process, are characterised by two special properties, namely a very high glass transition temperature (Tg) and exceptional dimensional stability up to temperatures close to the Tg.

A high glass transition temperature is also a known special characteristics of polyphenylene ether (PPE) as such. This property is however not immediately utilizable because the well known high viscosity of PPE in its molten state together with the consequent high working temperatures and high level of susceptibility to thermal oxidation mean that PPE is difficult to work on its own. In this respect, at high temperatures required to obtain a certain workability of the polymer, undesirable oxidation processes frequently intervene as shown by partial cross-linkage and gelling, with browning of the polymer material.

It is known that these problems have been partly solved by mixing PPE with thermoplastic styrene polymers because of the perfect compatibility between the two resins. Such compositions are claimed in numerous patents such as US 3,356,761, US 3,373,226, GB 1,125,620, SU 269,052 and US 3,639,506.

With such systems a greater thermo-oxidative stability is obtained together with improved workability, however the Tg of the system suffers a considerable decrease. A description of the variation in the Tg of such blends as a function of the relative composition is given in "Polymer Eng. and Sci." 17 (3), 213-219 (1977). In addition the articles obtained from such mixtures possess insufficient dimensional stability and creep resistance when under the particularly severe conditions of use which increasingly prevail in manufacturing industries.

In this respect, the development of polymers possessing a high glass transition temperature, rigidity, dimensional stability and creep resistance is justified by the considerable increase in their range of industrial application, particularly in the automotive and domestic appliance fields in which an ever increasing number of metal parts are being replaced by high-performance polymers.

The aforesaid difficulties in the use of PPE have been brilliantly solved by the polymer compositions of the present invention, in which the only polymer present is polyphenylene ether, which is treated with styrene and other mono-unsaturated and poly-unsaturated vinylaromatic monomers until totally or partially dissolved (depending on the added monomer quantity), after which the radical polymerization initiator and

possible accelerator are added.

By thermal or U.V. treatment of the mixtures prepared in this manner and possibly containing the normal additives used in PPE and polystyrene-based polymer compositions (such as stabilizers, flame retardants, mineral fillers, fibre reinforcements etc.), resins are obtained consisting of a cross-linked polyvinylaromatic matrix in which the PPE is uniformly dispersed.

The partially cross-linked resins obtained after thermal or U.V. treatment of the compositions according to the invention possess excellent properties such as very high glass transition temperatures which are always higher than those of mixtures of PPE and non-crosslinked vinylaromatic polymers of identical composition, together with excellent dimensional stability even at high temperature, and transparency of the moulded article. Polymer resins with such characteristics can be used in the production of electronic components such as printed circuit supports for which materials are required having a high insulating properties typical of polymers, together with thermal stability under hot conditions and exceptional thermal properties. They can also be used in the automotive field in which, as stated, there is a prevailing tendency to replace an ever increasing quantity of metal parts with polymer materials having analogous characteristics.

Again in this case, the resins used must have considerable dimensional stability under hot conditions to enable them to be painted on the production line together with the vehicle body. They are also of use in the domestic appliance field in which they can even replace moving mechanical parts such as toothed gears and pulleys which are generally produced in metal.

As stated, the polyphenylene ethers are the only polymer material contained in the compositions of the present invention. Polyphenylene ethers (PPE) are compounds which have been known for a long time. They are described in numerous patents and are generally obtained by oxidative coupling, in the presence of a suitable catalyst, of one or more alkylphenols of which that most widely used is 2,6-dimethylphenol. They have the general formula:

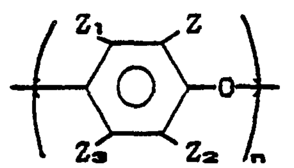

I

where Z, $Z_1$, $Z_2$, $Z_3$ are independently chosen from the group consisting of hydrogen, chlorine, bromine, fluorine, alkyl, substituted alkyl, cycloalkyl, substituted cycloalkyl, phenyl and substituted phenyl, and n represents the total number of monomer units and is a whole number greater than 10.

Non-limiting examples of PPEs which can be used in the production of the polymer compositions of the present invention and of the corresponding articles obtained by their cross-linking are:
poly(2,6-dimethyl-1,4-phenylene ether);
poly(2,6-diethyl-1,4-phenylene ether);
poly(2,6-methyl-6-ethyl-1,4-phenylene ether);
poly(2-methyl-6-propyl-1,4-phenylene ether);
poly(2,6-dipropyl-1,4-phenylene ether);
poly(2,3,6-trimethyl-1,4-phenylene ether);
poly(2-chloro-1,4-phenylene ether);
poly(2-bromo-1,4-phenylene ether);
poly(2-phenyl-1,4-phenylene ether);
poly(2-chloro-6-bromo-1,4-phenylene ether);
poly(2,6-dichloro-1,4-phenylene ether).

The PPE preferably used for the purposes of the present invention is poly(2,6-dimethyl-1,4-phenylene ether);
PPEs obtained by oxidative coupling of two or more different phenols are equally suitable for the purposes of the present invention. Generally in these copolymers one of the two or more monomers components is 2,6-dimethylphenol.

Equally suitable for the purposes of the present invention are the polyphenylene ethers corresponding to the following general formulas:

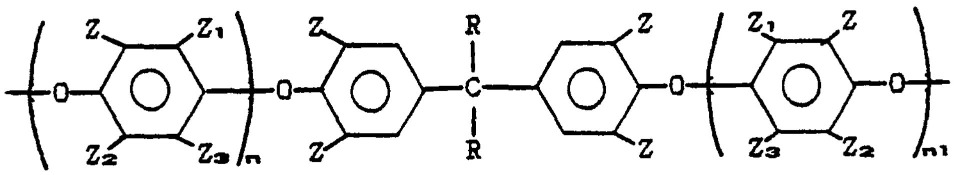

II

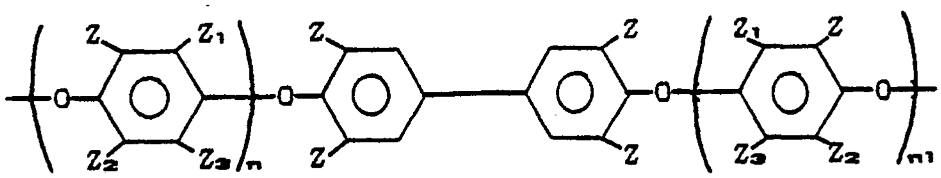

III

where Z, $Z_1$, $Z_2$, $Z_3$ have the same meanings as in the preceding formula (I), n and n1 are whole numbers which independently assume values greater than 10, and R is hydrogen or an alkyl radical. The synthesis methods for the polyphenylene ethers corresponding to formulas II and III are well known to experts of the art, and are described for example in "Die Makromolekulare Chemie" Vol. 186 (1985), pp 1835-1853.

The most well known PPE corresponding to formula II is the copolymer obtained from tetramethylbisphenol A and 2,6-dimethylphenol.

A non-limiting example of a PPE corresponding to general formula III is the copolymer obtained from tetramethyldiphenylenediol and 2,6-dimethylphenol.

By the mono-unsaturated vinylaromatic monomer component (component B1 in the polymer compositions of the present invention) is meant at least one iso-alkenyl compound taken from those of general formula:

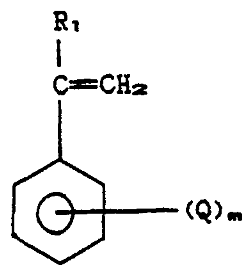

IV

where $R_1$ is hydrogen or a linear or branched $C_1$-$C_4$ alkyl radical or a halogen; Q is hydrogen, a halogen, a linear or branched $C_1$-$C_4$ alkyl radical or $-OCH_3$; m is a whole number between 1 and 5.

Non-limiting examples of monomer compounds corresponding to general formula II which are suitable for the purposes of the invention are styrene, alphamethylstyrene, ethylstyrene, alphachlorostyrene, alphabromostyrene, vinyltoluene, vinylxylene and the vinylhalobenzenes.

Suitable cross-linking agents able to generate the polymer cross-linkage responsible the exceptional characteristics of the articles obtained from the polymer mixtures of the invention are the polyunsaturated vinylaromatic monomers corresponding to the general formula:

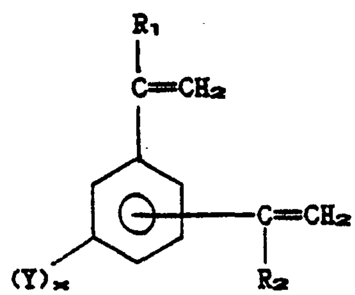

V

where Y is hydrogen, a halogen, a linear or branched $C_1$-$C_4$ alkyl, $-OCH_3$ or

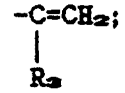

$R_1$, $R_2$, $R_3$ can be, independently of each other, hydrogen or a $C_1$-$C_4$ alkyl radical; and x is a whole number between 1 and 4.

The most significant examples of such monomers are divinylbenzene and trivinylbenzene.

To obtain the results of the present invention it is necesary to also add to the rection mass (consisting of the PPE, at least one mono-unsaturated reactive monomer and a cross-linking agent comprising at least one polyunsaturated reactive monomer) a small quantity of an initiator which promotes the radical polymerization of the monomers, with simultaneous cross-linkage of the polymerization mass by virtue of the polyunsaturated monomers. If the polymerization and cross-linkage of the mass are to be effected in the traditional manner, a small quantity of radical generators of between 0.01 and 10% with respect to the previously described component B added to the mass before its use is sufficient for this purpose. The choice of initiator obviously depends on the temperature and time involved in the working and moulding of the polymer composition for the purpose of forming the desired articles. Suitable for this purpose are in any event all those peroxides and hydroperoxides and all those radical generators which can be dissolve dor dispersed in the polymer mixture. Typical examples of such initiators are:

1) dialkylperoxides such as di-tert-butylperoxide and dicumylperoxide;

2) diacylperoxides such as benzoylperoxide, diacetylperoxide, bis(2,4-dichlorobenzoyl)peroxide, dilaurylperoxide, bis(3,5,5-trimethylhexanoyl)peroxide, dipropionylperoxide, dioctanoylperoxide, didecanoylperoxide etc.;

3) peresters such as tert-butyl-perbenzoate, tert-butyl-pivalate, tert-butyl-peroctanoate, tert-butylperacetate;

4) peracetals such as 2,2-bis(tert-butylperoxy)butanal;

5) peroxycarbonates such as cyclohexylperoxycarbonate, bis-(2-ethylhexyl)-peroxycarbonate, di-n-butylperoxycarbonate, diisopropylperoxycarbonate etc.;

6) azo compounds and azobisisobutyronitrile.

Other examples include cyclohexanoneperoxide, methylethylketone peroxide and acetone peroxide.

These initiators can be used either alone or in combination with suitable accelerators such as aromatic amines, cobalt or vanadium organic salts etc.

By properly choosing the most suitable combination from the aforesaid initiators and accelerators it is possible to treat the compositions of the present invention to obtain the desired articles over a wide temperature range starting from close to ambient and extending as far as 300 °C.

If on the other hand it is desired to effect the cross-linking polymerization of the polymer compositions of the present invention at low temperature by ultraviolet radiation, it is a good rule to add a small quantity of an organic photoinitiator, of generally between 0.1 and 5 parts by weight % of component B, to the mass to be transformed.

Organic photoinitiators useful for this purpose are all those compounds soluble or dispersable in the polymer compositions of the present invention which are able to generate free radicals under the action of ultraviolet radiation.

Examples of the application of such polymerization methods are reported in the following publications: J.A.C.S. 77, 494 (1955); Trans. Faraday Soc. 50, 73 (1954).

Non-limiting examples of organic photoinitiators suitable for the purposes of the present invention are: benzyl-dimethyl-ketal, 2- hydroxy-2-methyl-1-phenylpropanone, thioxanthone and generally the benzoin ethers.

The photoinitiator is preferably present in a quantity of between 1 and 3% by weight with respect to component B. It acts both in the presence and in the absence of the aforesaid peroxide component, although the simultaneous presence of this latter is preferred.

If articles with self-extinguishing properties are required, flame retardants such as an organic phosphate can be added to the polymer compositions of the present invention, together optionally with a halogenated compound, this latter acting with synergic effect on the phosphate.

Non-limiting examples of organic phosphates are triphenylphosphate, tritoluylphosphate, dibutylphenylphosphate, trinonylphenylphosphate, tricresylphosphate etc.

The halogenated compound used can for example be hexabromobenzene, tetrabromobutane, pentabromotoluene, decachlorodiphenyl, decabromodiphenyl, tetrabromophthalic anhydride etc.

If complete non-flammability of the articles is required, a further addition of antimony trioxide can be

made.

If special impact strength is required for the articles obtained by polymerization and cross-linkage of the polymer compositions according to the present invention, a certain proportion of elastomeric polymers generally of between 1 and 10% of the total composition can be added to the polymer compositions, in accordance with the well known state of the art methods for improving the anti-impact properties of PPE.

Such polymers can also be functionalized and contain groups of unsaturated, epoxy, isocyanic, anhydride, amino, hydroxyl or carboxyl type.

The polymer compositions of the present invention can also contain the usual additives such as various minerals and fillers, glass fibres, pigments, stabilizers, plasticizers, lubricants, antistatic agents etc.

The experimental examples reported hereinafter are given as non-limiting illustration of the present invention.

Example 1-7 illustrate typical preparations, while examples 8-11 describe comparison systems.

They show that a substantial Tg increase over corresponding linear blends is obtained by a content of crosslinking agent equal to or greater than 5% by weight in the mixture.

EXAMPLE 1

50 parts (as parts by weight wherever appearing in the examples) of poly(2,6-dimethyl-1,4-phenyleneoxide) having an intrinsic viscosity of 0.54 dl/g (known as PPE in the following examples) and 50 parts of a mixture consisting of 25 parts of styrene monomer and 25 parts of a 50/50 w/w mixture of ethylvinylbenzene and divinylbenzene (equal to 22 mol% of divinylbenzene with respect to the monomers) were introduced into a mechanical mixer. After mixing for 10 minutes at a stirring rate of 80 r.p.m. and a temperature of 50-80 °C, the system was cooled to 40 °C and the stirring rate reduced to 20 r.p.m.

2% by weight (with respect to the monomers) of benzoyl peroxide was then added.

After the peroxide addition was complete the mixture was kept stirring for 2 minutes at a rate of 60 r.p.m. while maintaining the temperature below 60 °C.

The product of this mixing then underwent reactive moulding in a compression press, under the following test conditions:

a) isothermal at 120 °C for 10 minutes
b) increase from 120 to 200 °C (rate = 5 °C/minute)
c) isothermal at 200 °C for 10 minutes
d) rapid cooling. Applied pressure = 16 kg/cm$^2$

The composition and Tg of the resultant material, by DSC determination, are shown in the accompanying Table 1.

EXAMPLE 2

50 parts of PPE and 50 parts of a mixture consisting of 25 parts of styrene monomer and 25 parts of a 50/50 w/w mixture of ethylvinylbenzene and divinylbenzene (equal to 22 mol% of divinylbenzene with respect to the monomers) were introduced into a mechanical mixer.

The system was mixed under the same conditions as reported in Example 1.

The peroxide (benzoylperoxide) was added as described in Example 1 in a quantity of 1% w/w with respect to the monomers.

The composition and Tg of the resultant material, by DSC determination, are shown in the accompanying Table 1. Load data relative to mechanical tensile tests are reported in the accompanying Table 3.

EXAMPLE 3

50 parts of PPE and 50 parts of a mixture consisting of 25 parts of styrene monomer and 25 parts of a 50/50 w/w mixture of ethylvinylbenzene and divinylbenzene (equal to 22 mol% of divinylbenzene with respect to the monomers) were introduced into a mechanical mixer.

The system was mixed under the same conditions as reported in Example 1.

The peroxide (tert-butylperbenzoate) was added as described in Example 1 in a quantity of 1% w/w with respect to the monomers. The composition and Tg of the resultant material, by DSC determination, are shown in the accompanying Table 1.

EXAMPLE 4

40 parts of PPE and 60 parts of a mixture consisting of 30 parts of styrene monomer and 30 parts of a 50/50 w/w mixture of ethylvinylbenzene and divinylbenzene (equal to 22 mol% of divinylbenzene with respect to the monomers) were introduced into a mechanical mixer.

The system was mixed under the same conditions as reported in Example 1.

The peroxide (benzoylperoxide) was added as described in Example 1 in a quantity of 1% w/w with respect to the monomers. The composition and Tg of the resultant material, by DSC determination, are shown in the accompanying Table 1.

Table 2 shows the Tg of the material evaluated by the Rheovibron dynamic mechanical method as a function of the applied frequency. The Tg values are indicated by the points of inflection on the curves ($E'$ against temperature). Load data relative to mechanical tensile tests are reported in Table 3.

EXAMPLE 5

50 parts of PPE and 50 parts of a mixture consisting of 32.6 parts of styrene monomer and 17.4 parts of a 50/50 w/w mixture of ethylvinylbenzene and divinylbenzene (equal to 15 mol% of divinylbenzene with respect to the monomers) were introduced into a mechanical mixer.

The system was mixed under the same conditions as reported in Example 1.

The peroxide (benzoylperoxide) was added as described in Example 1 in a quantity of 1% w/w with respect to the monomers. The composition and Tg of the resultant material, by DSC determination, are shown in the accompanying Table 1.

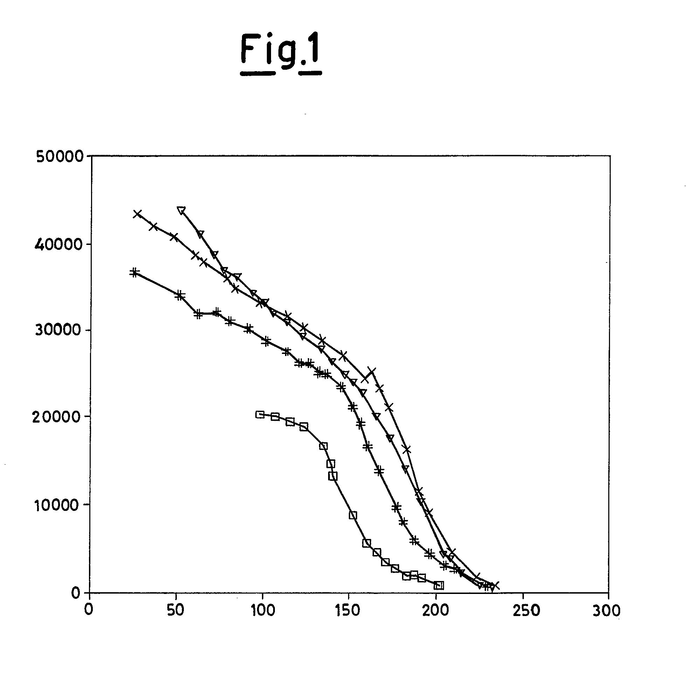

The variation in the modulus of elasticity $E'$ as a function of the temperature, evaluated by the Rheovibron dynamic mechanical method, is shown in Figure 1.

Table 2 shows the Tg values indicated by the points of inflection on the curves ($E'$ against temperature) obtained by the said method at various stressing frequencies. Load data relative to mechanical tensile tests are reported in Table 3.

EXAMPLE 6

50 parts of PPE and 50 parts of a mixture consisting of 38.2 parts of styrene monomer and 11.8 parts of a 50/50 w/w mixture of ethylvinylbenzene and divinylbenzene (equal to 10 mol% of divinylbenzene with respect to the monomers) were introduced into a mechanical mixer.

The system was mixed under the same conditions as reported in Example 1.

The peroxide (benzoylperoxide) was added as described in Example 1 in a quantity of 1% w/w with respect to the monomers. The composition and Tg of the resultant material, by DSC determination, are shown in the accompanying Table 1.

The variation in the modulus of elasticity $E'$ as a function of the temperature, evaluated by the Rheovibron dynamic mechanical method, is shown in Figure 1.

Table 2 shows the Tg values indicated by the points of inflection on the curves ($E'$ against temperature) obtained by the said method at various stressing frequencies. Load data relative to mechanical tensile tests are reported in Table 3.

EXAMPLE 7

50 parts of PPE and 50 parts of a mixture consisting of 44 parts of styrene monomer and 6 parts of a 50/50 w/w mixture of ethylvinylbenzene and divinylbenzene (equal to 5 mol% of divinylbenzene with respect to the monomers) were introduced into a mechanical mixer.

The system was mixed under the same conditions as reported in Example 1.

The peroxide (benzoylperoxide) was added as described in Example 1 in a quantity of 1% w/w with respect to the monomers.

The composition and Tg of the resultant material, by DSC determination, are shown in the accompanying Table 1.

The variation in the modulus of elasticity $E'$ as a function of the temperature, evaluated by the Rheovibron dynamic mechanical method, is shown in Figure 1.

Table 2 shows the Tg values indicated by the points of inflection on the curves (E′ against temperature) obtained by the said method at various stressing frequencies. Load data relative to mechanical tensile tests are reported in Table 3.

EXAMPLE 8

50 parts of PPE and 50 parts of a mixture consisting of 47.53 parts of styrene monomer and 2.47 parts of a 50/50 w/w mixture of ethylvinylbenzene and divinylbenzene (equal to 2 mol% of divinylbenzene with respect to the monomers) were introduced into a mechanical mixer.

The system was mixed under the same conditions as reported in Example 1.

The peroxide (tert-butylperbenzoate) was added as described in Example 1 in a quantity of 1% w/w with respect to the monomers.

The composition and Tg of the resultant material, by DSC determination, are shown in the accompanying Table 1.

EXAMPLE 9

50 parts of PPE and 50 parts of a mixture consisting of 48.76 parts of styrene monomer and 1.24 parts of a 50/50 w/w mixture of ethylvinylbenzene and divinylbenzene (equal to 1 mol% of divinylbenzene with respect to the monomers) were introduced into a mechanical mixer.

The system was mixed under the same conditions as reported in Example 1.

The peroxide (tert-butylperbenzoate) was added as described in Example 1 in a quantity of 1% w/w with respect to the monomers. The composition and Tg of the resultant material, by DSC determination, are shown in the accompanying Table 1.

EXAMPLE 10

50 parts of PPE and 50 parts styrene monomer were introduced into a mechanical mixer. The system was mixed under the same conditions as reported in Example 1.

The peroxide (benzoylperoxide) was added as described in Example 1 in a quantity of 1% w/w with respect to the monomers.

The composition and Tg of the resultant material, by DSC determination, are shown in the accompanying Table 1.

The variation in the modulus of elasticity E′ as a function of the temperature, evaluated by the Rheovibron dynamic mechanical method, is shown in Figure 1.

Table 2 shows the Tg values indicated by the points of inflection on the curves (E′ against temperature) obtained by the said method at various stressing frequencies. Load data relative to mechanical tensile tests are reported in Table 3.

EXAMPLE II

50 parts of PPE and 50 parts of polystyrene of Mw 215,000 g/mole (Edistir 1380 produced by Montedison) were introduced into a mechanical mixer and the mixture kept stirring at a temperature of 280 °C for 5 minutes.

The resultant product was cooled in water, dried, finely ground and compression-moulded (P = 40 kg/cm$^2$; T = 290 °C).

The Tg of the linear PPO/PS blend, measured by DSC ($\Delta T$ = 50-300 °C, rate = 10 °C/min) is reported in the accompanying Table 1.

On the graph of the accompanying Figure 1 the vertical axis represents the modulus of elasticity E′ - (kg/cm$^2$) obtained from Rheovibron measurements at an oscillation frequency of 11 Hz, and the horizontal axis represents temperature (°C).

The curves relate to the materials obtained in certain previously described examples, indicated by the following symbols:

—X— Example 5

—∇— Example 6
—#— Example 7
—□— Example 5

TABLE 1

PPE/MONOMER MIXTURES OF VARYING DIVINYLBENZENE CONTENT

| EXAMPLE No. | PPE % w/w | DVB mol% | EVB mol% | STY mol% | INITIATOR | | Tg(a) |
|---|---|---|---|---|---|---|---|
| | | | | | type | % w/w(b) | |
| 1 | 50 | 22 | 22 | 56 | BPO | 2 | 203 |
| 2 | 50 | 22 | 22 | 56 | BPO | 1 | 202 |
| 3 | 50 | 22 | 22 | 56 | TBPB | 1 | 193 |
| 4 | 40 | 22 | 22 | 56 | BPO | 1 | 180 |
| 5 | 50 | 15 | 15 | 70 | BPO | 1 | 200 |
| 6 | 50 | 10 | 10 | 80 | BPO | 1 | 198 |
| 7 | 50 | 5 | 5 | 90 | BPO | 1 | 180 |
| 8 | 50 | 2 | 2 | 96 | TBPB | 1 | 153 |
| 9 | 50 | 1 | 1 | 98 | TBPB | 1 | 155 |
| 10 | 50 | 0 | 0 | 100 | BPO | 1 | 155 |
| 11 | 50 | PPE/POLYSTYRENE BLEND | | | | | 157 |

N.B. DVB = divinylbenzene; EVB = ethylvinylbenzene; STY = styrene; BPO = benzoylperoxide; TBPB = tert-butylperbenzoate

a) evaluated by DSC (ΔT = 50-300° C; rate = 10° C/min)
b) with reference to monomers.

TABLE 2

| EXAMPLE No. | Tg (° C) | | | |
|---|---|---|---|---|
| | 3.5 Hz | 11 Hz | 35 Hz | 110 Hz |
| 4 | 210 | 210 | 216 | 223 |
| 5 | 189 | 190 | 192 | 193 |
| 6 | 183 | 191 | 190 | 193 |
| 7 | 175 | 178 | 177 | - |
| 10 | 145 | 150 | 150 | 150 |

TABLE 3

| MECHANICAL TENSILE TESTS | | |
|---|---|---|
| EXAMPLE No. | ULTIMATE TENSILE STRESS N/mm$^2$ | YIELD STRENGTH N/mm$^2$ |
| 2 | 34.68 | - |
| 4 | 67.95 | - |
| 5 | 32.30 | - |
| 6 | 64.43 | - |
| 7 | 62.17 | 72.83 |
| 10 | 65.72 | - |

## Claims

1. Polymer compositions cross-linkable both thermally and by the effect of ultraviolet radiation, comprising:

A) from 10 to 90 percent by weight of at least one polyphenylene ether corresponding to oen of the following general formulas:

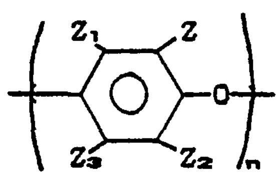

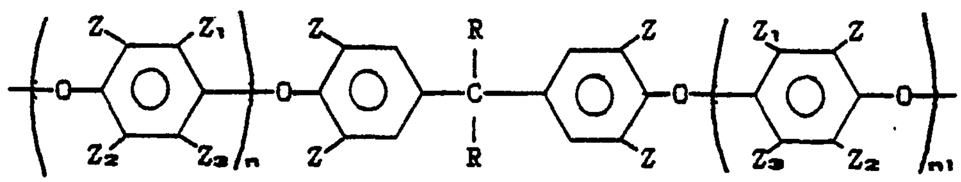

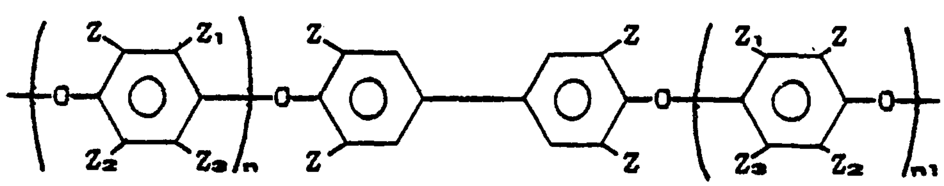

where Z, $Z_1$, $Z_2$, $Z_3$ are monovalent substituents independently chosen from the group consisting of hydrogen, chlorine, bromine, fluorine, alkyl radical, substituted alkyl radical, cycloalkyl radical, substituted cycloalkyl radical, phenyl radical and substituted phenyl radical;

R is an alkyl radical; and n and n1 are whole numbers greater than 10;

B) from 10 to 90 percent by weight of at least one mono-unsaturated vinylaromatic monomer chosen from those of general formula:

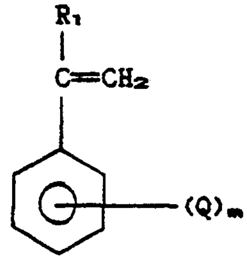

where $R_1$ is hydrogen or a $C_1$-$C_4$ linear or branched alkyl radical or a halogen; Q is hydrogen, a halogen a $C_1$-$C_4$ linear or branched alkyl radical or $-OCH_3$; m is a whole number between 1 and 5;

C) from 1 to 70 percent by weight of at least one poly-unsaturated vinylaromatic monomer chosen from those of general formula:

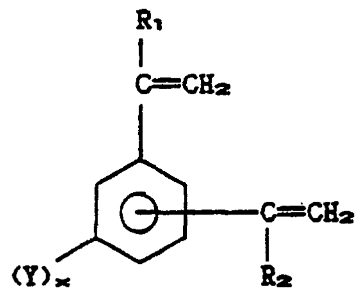

where $R_1$ and $R_2$ are substituents independently chosen from the group consisting of hydrogen, a linear or branched $C_1$-$C_4$ alkyl radical, $-OCH_3$ and the unsaturated radical

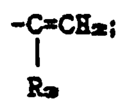

where the substituent $R_3$ can be hydrogen or a linear or branched $C_1$-$C_4$ alkyl radical;

Y is hydrogen, a halogen, a linear or branched $C_1$-$C_4$ alkyl radical, $-OCH_3$ or the unsaturated radical

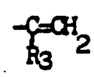

x is a whole number between 1 and 4;

D) from 0.01 to 10 percent by weight, with respect to the sum of the vinylaromatic monomers B) + C), of an initiator able to generate radicals and to polymerize the monomers contained in the polymer composition;

E) from 0.1 to 5 percent by weight of an organic photoinitiator.

2. A polymer composition as claimed in claim 1, characterised in that the polyphenylene ether is poly-(2,6-dimethyl-1,4-phenyl ether).

3. A polymer composition as claimed in claims 1 and 2, characterised by containing styrene as constituent B.

4. A polymer composition as claimed in the preceding claims, characterised by containing alphamethylstyrene as constituent B.

5. A polymer composition as claimed in the preceding claims, characterised by containing vinyltoluene as constituent B.

6. A polymer composition as claimed in the preceding claims, characterised by containing divinylbenzene as constituent C.

7. A polymer composition as claimed in the preceding claims, characterised b containing trivinylbenzene as constituent C.

8. A polymer composition as claimed in the preceding claims, characterised in that the composition is

prepared by totally or partially dissolving constituent A in the mixture formed from constituent B and constituent C, then adding constituents D and E.

9. A polymer composition as claimed in the preceding claims, characterised by comprising one or more of the following constituents: an agent for improving anti-impact properties, a filler, glass fibre, carbon fibre, metal shavings, natural or synthetic fibre fabric, stabilizer, plasticizer, dye, antistatic agent, flame retardant agent.

10. A method for producing articles, consisting of introducing or injecting or spreading onto a support or into a mould the polymer composition claimed in the preceding claims, then converting it into the desired solid product by thermal treatment or by ultraviolet irradiation.

11. Articles and manufactured products in accordance with the method of claim 9, using a polymer composition claimed in claims 1 to 8.

12. A method for producing laminates consisting of spreading a resin of claims 1 to 8 onto a thin sheet of metal or plastics material, then covering this with a second sheet of the same or different material, and subjecting the assembly to thermal treatment.

Fig.1